# EUROPEAN PATENT SPECIFICATION

(11) **EP 0 534 518 B1**
(45) Date of publication and mention of the grant of the patent: **17.08.1994**
(21) Application number: 92202674.5
(22) Date of filing: 13.03.1990
(51) Int. Cl.: F16L 3/12

(54) **Pipe-clip**
Rohrschelle
Collier de serrage pour tuyaux

(30) Priority: 14.03.1989 NL 8900619
(43) Date of publication of application: 31.03.1993
(62) Divisional of application: 90200602.2
(73) Proprietor: J. van Walraven B.V., NL-3641 RK Mijdrecht (NL)
(72) Inventor: van Walraven, Jan, NL-3641 GP Mijdrecht (NL)
(74) Representative: Boelsma, Gerben Harm, Ir.

(56) References cited:
- EP-A- 0 182 238
- DE-U- 8 806 714

## Description

The invention plates to a pipe-clip as defined in the first part of the claim.

Such a pipe-clip is known from DE-U-8806714. auxiliary part with this well-known pipe-clip is in the form of a substantially U-shaped spring clip comprising a web and two legs extending therefrom and adapted to be slid from the radially outer end of the second flange of the pipe-clip inwardly onto said flange. One of the longitudinally slotted legs of the U shaped spring clip is substantially flat, whereas the second leg extends - from the web - first convergingly and then divergingly relative to the first leg. In one form of this well-known pipe-clip the U-shaped spring clip is mounted with its flat leg lying onto the second flange and facing towards the first flange, whereas the nut is pressed against the opposite side of the second flange by the bend between the converging and diverging portions of the second leg. The spring clip allows the nut to tilt about its radially inwardly located edge and about the bend between the converging and diverging portions of the second leg, thereby urging the clip legs to spread apart and permitting the clamping screw to tilt outwardly.

In a second form of this well-known pipe clip the U-shaped spring clip has its flat leg on the side of the second flange that is turned away from the first flange. In this case the nut is captured between the (flat) outer side of the second flange on one hand and the flat leg of the spring clip on the other hand, whereas the second leg of the spring clip is positioned with said bend bearing on the inner side of the second flange and with the converging and diverging portions extending obliquely from said second flange inner side in opposite directions. In this case a tilting movement of the second spring clip leg, urging the two legs to spread apart, allows the nut and the flat leg to tilt about the radially inner edge of the nut and thereby permit the fastening screw to tilt outwardly.

In both forms special retaining tongues are required to hold the clip and the nut in proper position.

The present invention provides a pipe-clip of the type defined in the first part of the claim, which favourably distinguishes from the well-known pipe-clip, by the features mentioned in the characteristic clause of the claim.

The invention will be hereinafter further explained with reference to the drawings.
Fig. 1 is a perspective view of the pipe-clip according to the invention in a first embodiment;
fig. 2A-C show a cross-sectional view of the pipe-clip according to Fig. 1 in three successive stages of closing the annular clip body around the article to be fastened;
fig. 3A and 3B show a side elevation and front elevation respectively of a modification of the auxiliary part of fig. 1 and 2A-C.

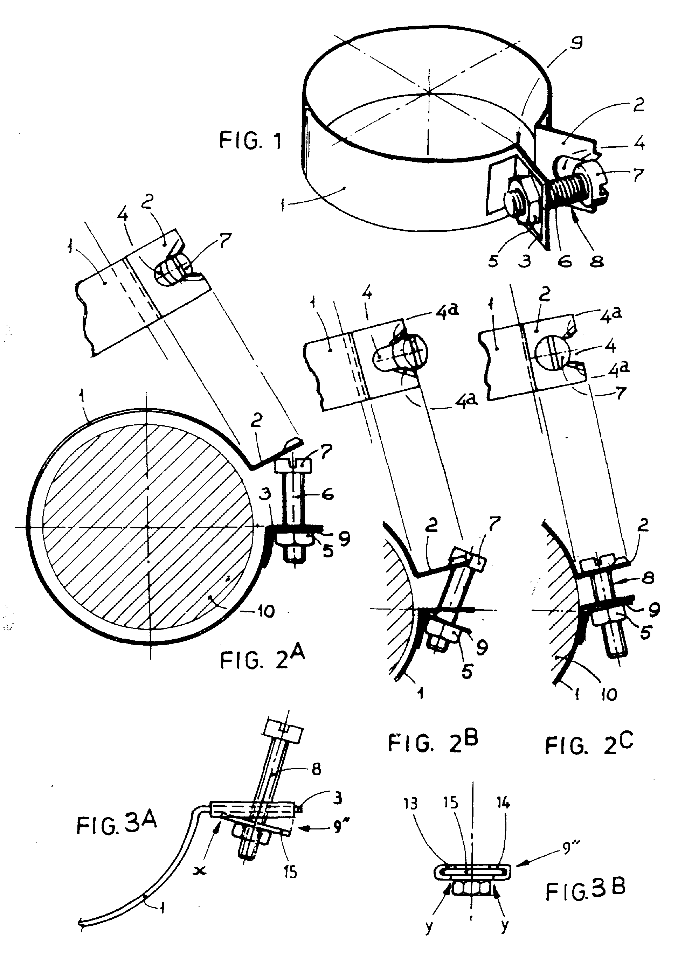

The pipe-clip shown in fig. 1 and 2 has an integrally formed annular clip body 1 that is made of a metallic strip. The ends of the annular clip body 1 are bent to form a first and a second flange 2 and 3 respectively. The first flange 2 is provided with a radial slot emanating from the terminal edge of said flange, while the second flange 3 is provided with a corresponding slot-shaped opening (not further shown) for accomodating the threaded shank 6 of a fastening screw 8, the head of which is indicated at 7.

The nut 5 which cooperates with the screw 8, is fastened, e.g. by welding, to an auxiliary part 9 formed by a leaf spring, which part normally (fig. 1 and fig. 2A-B) bears onto that side of the flange 3 which faces away from said flange 2 and which has an end portion 9a bent at substantially right angles that is attached, e.g. by spot welding, to the clip body 1 at a location adjacent the flange 3.

Fig. 2A shows the pipe-clip in a position around the article 10 (e.g. a pipe) to be fastened, in a stage, in which the first flange 2 abuts to the head 7 of the clamping screw that has been provisorily screwed into the nut 5 via the slot shaped opening in the second flange 3.

Fig. 2B shows how the clamping screw 8 is tilting outwardly when the flanges 2 and 3 are moved towards one another. It is clearly shown that the auxiliary part 9 has turned away (against spring action) from the flange 3. This tilting movement may be enlightened by having the screw head 7 guided by the outwardly bend and slightly diverging longitudinal edges 4a of the slot 4. As soon as in this way the clamping screw head 7 has reached the side of the flange 3 turned away from the flange 2, the clamping screw 8 will snap with its shank 6 into the slot 4 as a result of the auxiliary part 9 being then allowed to return to its position shown in fig. 2A.

At last fig. 2C shows the pipe-clip in the position, in which the annular clip body 1 has been clamped around the article 10 by tightening the clamping screw 8.

In the embodiment of fig. 3A-3B the auxiliary part 9˝, formed of a strip of spring steel has its longitudinal edges 13, 14 bent in such a way, that it may be slided onto the second flange 3, whereby the longitudinal edges 13, 14 engage those of the flange 3. The so formed auxiliary part 9˝ is provided with two parallel cuts Y, which start from one end of the auxiliary part and terminate at a short distance (at X) from the other end. In this manner a resilient tongue 15 is provided, that carries the nut 5. Fig. 3A shows this tongue in its, against spring action, outwardly bend position corresponding to the tilted position of the screw 8.

## Claims

1. A pipe-clip, comprising an annular clip body (1) formed from a flexible strip, the ends of which are bent into first and second flanges (2, 3) adapted to be pulled together by means of a fastening screw (8) and nut (15), said first (2) flange having an outwardly opening slot (4) adapted to laterally receive the shank (6) of the fastening screw (8), whereas the nut (5) is kept in place - on the side of the second flange (3) that is turned away from the first flange (2), by an auxiliary part (9, 9˝) that is formed of a thin strip of spring steel, adapted to engage the second flange (3) and to elastically deform so as to allow the nut (5) to perform a tilting movement relative to said second flange (3), in such a way, that, when applying the annular clip (1) body around a pipe or similar article - causing the two flanges (2, 3) to move one towards the other - the screw (8) provisorally threaded into the nut (5) held by the auxiliary part (9, 9˝) will first - due to the first flange (2) pressing against the head (7) of the screw (8) - tilt outwardly within a shot-shaped passage-opening in said second flange and then tilt back under spring action so that its shank (6) its enters into said outwardly opening slot (4), characterized in that said thin strip of spring steel is either formed to a substantially right angle (9), one leg of which is fastened to the clip body (1) with the bending line between the legs located adjacent the transition between the annular clip body (1) and said second flange (3) so as to allow the second leg, that freely faces the second flange (3) and carries said nut (5), to resiliently bend about said bending line or
has its longitudinal edges (13, 14) bent in such a way that it may be slided onto the second flange (3), whereby the longitudinal edges (13, 14) of the strip (9˝) engage those of the second flange (3), whereas the strip is provided with two parallel cuts (Y) which start at one end of the strip (9˝) and terminate at a short distanoe from the other end, thereby forming a resilient tongue (15) that carries the nut (5).

## Patentansprüche

1. Rohrschelle, mit einem aus einem biegsamen Bandstreifen geformten ringförmigen Schellenkörper (1), dessen Enden zu einem ersten und zweiten Flansch (2, 3) umgebogen sind, welche mittels einer Befestigungsschraube (8) und Mutter (15) zusammenziehbar sind, wobei der erste Flansch (2) einen nach aussen öffnenden Schlitz (4) zum seitlichen Aufnehmen der Schaft (6) der Befestigungsschraube (8) aufweist, während die Mutter (5) an der vom ersten Flansch (2) abgekehrten Seite des zweiten Flansches (3) durch einen aus einem dünnen Federstahlstreifen geformten Hilfsteil (9, 9˝) gehalten wird, der auf dem zweiten Flansch (3) angreift und elastisch verformbar ist, damit die Mutter (5) gestattet wird eine Kippbewegung mit Bezug auf den zweiten Flansch (3) auszuführen, in der Weise, dass beim Anbringen des ringförmigen Schellenkörpers (1) um ein Rohr oder derartigen Gegenstand - wobei die beiden Flansche (2, 3) zwangsläufig zueinander bewegt werden - die provisorisch in der vom Hilfsteil (9, 9˝) gehaltenen Mutter (5) eingeschraubte Schraube (8), zunächst, infolge der Anpressung des ersten Flansches (2) gegen den Kopf (7) der Schraube (8) - in einem schlitzförmigen Loch im zweiten Flansch nach aussen kippt und darauf unter Federwirkung zurückkippt, sodass die Schraubenschaft (6) in den nach aussen öffnenden Schlitz (4) eintreten kann, dadurch gekennzeichnet, dass der dünne Federstahlstreifen entweder zu einem etwa rechtwinkligen Winkelstück (9) geformt ist, dessen eine Schenkel auf dem Schellenkörper (1) befestigt ist und zwar mit der Scheitellinie zwischen den Schenkeln in der Nähe des Übergangs zwischen dem ringförmigen Schellenkörper (1) und dem zweiten Flansch (3), sodass der zweite Schenkel, der frei vom zweiten Flansch (3) liegt und die Mutter (5) trägt, federnd um die Scheitellinie biegen kann, oder
an den beiden Längsrändern (13, 14) in der Weise umgebogen ist, dass der Federstahlstreifen auf den zweiten Flansch (3) geschoben werden kann, wobei die Längsränder (13, 14) des Streifens (9˝) diejenige des zweiten Flansches umgreifen, während der Streifen mit zwei parallel laufenden Einschhnitten (Y) versehen ist, die von einem Ende des Streifens ausgehen und in kurzem Abstand vom gegenüberliegenden Ende enden, dabei eine federnde Zunge (15) bildend, welche die Mutter (5) trägt.

## Revendications

1. Collier de serrage pour tuyau, comprenant un corps annulaire (1) de collier de serrage qui est formé d'une bande flexible dont les extrémités sont pliées de façon à former une première et une seconde ailettes (2, 3) destinées à être tirées l'une contre l'autre au moyen d'une vis de fixation (8) et d'un écrou (5), la première ailette (2) comportant une fente (4) débauchant à l'extérieur et destinée à recevoir transversalement la tige (6) de la vis de fixation (8), tandis que l'écrou (5) est maintenu en place, sur la face de la seconde ailette (3) qui est tournée à l'opposé de la première ailette (2), par une pièce auxiliaire (9, 9˝) qui est formée d'une mince bande d'acier à ressort et est destinée à venir au contact de la seconde ailette (3) et à se déformer élastiquement de façon à permettre à l'écrou (5) d'exécuter un mouvement de basculement vis-à-vis de la seconde ailette (3), d'une manière telle que, lorsqu'on applique le corps annulaire (1) du collier de serrage autour d'un tuyau ou article analogue, ce qui fait se rapprocher l'une de l'autre les deux ailettes (2, 3), la vis (8), viséée provisoirement dans l'écrou (5) maintenu par la pièce auxiliaire (9, 9˝), bascule d'abord vers l'extérieur dans une ouverture de passage en forme de fente ménagée dans la seconde ailette, du fait que la première ailette (2) exerce une pression sur la tête (7) de la vis (8), puis bascule en sens inverse sous l'effet de l'action élastique, de sorte que sa tige (6) pénètre dans la fente (4) débouchant à l'extérieur, caractérisé en ce que la mince bande d'acier à ressort:
- soit a une forme pratiquement en angle droit (9) dont une branche est fixée au corps (1) du collier de serrage et dont la ligne de pliage entre les branches est disposée d'une manière adjacente à la transition entre le corps annulaire (1) du collier de serrage et la seconde ailette (3), de façon à permettre à la seconde branche, qui fait face librement à la seconde ailette (3) et porte l'écrou (5), de plier élastiquement autour de ladite ligne de pliage,
- soit a ses bords longitudinaux (13, 14) qui sont pliés d'une manière telle qu'on peut la faire glisser sur la ailette (3), ces bords longitudinaux (13, 14) de la bande (9˝) venant au contact de ceux de la seconde ailette (3), tandis qu'il est ménagé dans la bande deux découpes parallèles (Y) qui s'éloignent d'une extrémité de la bande (9˝) et s'interrompent à une courte distance de l'autre extrémité, en formant ainsi une languette élastique (15) qui porte l'écrou (5).
